# EUROPÄISCHE PATENTSCHRIFT

(11) **EP 0 727 862 B1**
(45) Veröffentlichungstag und Bekanntmachung des Hinweises auf die Patenterteilung: **20.10.1999**
(21) Anmeldenummer: 96102465.0
(22) Anmeldetag: 19.02.1996
(51) Int. Cl.: G05B 19/042, H02J 13/00

(54) **Steuerungssytem zur Ansteuerung von Einrichtungen im Haushaltsbereich**
Control system for controlling of appliances for domestic use
Système de commande pour appareils à usage domestique

(30) Priorität: 20.02.1995 DE 19505675
(43) Veröffentlichungstag der Anmeldung: 21.08.1996
(73) Patentinhaber: BSH Bosch und Siemens Hausgeräte GmbH, 81669 München (DE)
(72) Erfinder: Lüdtke, Franz-Rüdiger, Dipl.-Ing., D-13507 Berlin (DE); Meyer, Hans-Holger, Dipl.-Ing., D-12689 Berlin (DE); Striek, Ralf-Jürgen, Dipl.-Ing., D-13629 Berlin (DE); Witt, Wolf-Dieter, Dipl.-Ing., D-10119 Berlin (DE)

(56) Entgegenhaltungen:
- EP-A- 0 199 442
- DE-A- 4 004 097
- PATENT ABSTRACTS OF JAPAN vol. 9, no. 116 (P-357), 21.Mai 1985 & JP-A-60 003712 (MATSUSHITA DENKI SANGYO), 10.Januar 1985,

## Beschreibung

Die vorliegende Erfindung bezieht sich auf ein Steuerungssystem zur Ansteuerung von Einrichtungen im Haushaltsbereich, insbesondere zur Ansteuerung von Haushaltsgeräten, bei welchen einer Mehrzahl von anzusteuernden Einrichtungen eine zentrale Steuereinheit zugeordnet ist, die über Datenwege mit den anzusteuernden Einrichtungen in Kommunikationsverbindung stehen, wobei die zentrale Steuereinheit Programmangebote und -abläufe für die angeschlossenen Einrichtungen gespeichert enthält und abrufbar auf einem Bildschirm darstellt.

Es sind bereits Haushaltsgeräte mit eingebauter Steuerung bekannt, die alle autonom als eigenständige Einheiten bzw Einrichtungen funktionieren. Üblicherweise sind diese Steuereinrichtungen für Haushaltsgeräte, wie Geschirrspülauatomaten, Waschmaschinen und Elektroherde so ausgebildet, daß sie mit einem spezifischen, ihre Funktionsabläufe steuernden Mikroprozessor oder einer elektrischen Steuereinheit versehen sind. Hierbei kann die elektronische Steuervorrichtung aus einem Mikroprozessor bestehen, der anstehende Signalgrößen über Analog-Digitalwandler erfaßt und aus diesen Signalgrößen Steuersignale ableitet, die für den Funktionsablauf des jeweiligen Haushaltsgeräts wesentlich sind. All diesen Steuereinrichtungen für Haushaltsgeräte ist gemeinsam, daß sie für jedes Gerät spezifisch angepaßt werden müssen, und daß jedes Haushaltsgerät somit ein solches Steuerteil benötigt. Es ist jedoch nicht möglich, die Funktionen verschiedener derartig ausgestatteter Haushaltsgeräte von einer Bedienungseinheit aus zu bedienen und zu steuern, bzw. verschiedene Funktionen dieser Haushaltsgeräte untereinander zu verknüpfen. Auch ist es nicht möglich, die hierbei eingesetzten Haushaltsgeräte fernzubedienen oder fernzuüberwachen.

Von diesem Stand der Technik geht bereits ein Entwicklungsvorschlag aus, welcher einen Küchenblock mit elektronischer Steuereinrichtung beschreibt (DE-OS 31 20 723). Dieser Küchenblock zeichnet sich aus durch eine Halterung mit rasterartig angeordneten Halteelementen, Energieversorgungselementen und Steuerungselementen, an der rasterartig eine Mehrzahl von Küchenmodulen lösbar befestigbar sind, die mit der Befestigung an der Halteeinrichtung mit einer elektronischen Steuereinrichtung und Energieversorgungseinrichtung in Wirkverbindung bringbar sind. In diesem Zusammenhang ist auch vorgeschlagen worden, daß die elektronische Steuereinrichtung als mit den Energieversorgungselementen verbundene Kommunikations- und Steuereinheit ausgebildet ist, die einen Mikroprozessor mit Speicheranordnung aufweist, der mittels eines Bedienfeldes programmierbar ist, über ein optoelektronisches Kommunikations-Interface mit einem Lichtleiter-Datenbus verbunden, der mit den Küchengeräte-Modulen in Wirkverbindung steht und über ein weiteres optoelektronisches Kommunikations-Interface mit einem Lichtleiter-Datenbus verbunden ist, an den mindestens eine Kommunikationseinheit angeschlossen ist.

Diese bekannte Anordnung verweist auch auf den Vorteil, daß das zum Einsatz gebrachte lichtelektronische Steuersystem gleichzeitig in ein Haus-Kommunikationssystem einbezogen werden kann, so daß eine Fernbedienung und Fernüberwachung von jedem Ort im Hause über die Funktionsabläufe innerhalb der Küche möglich sind. So sind alle beispielsweise in der Küche für die Haushaltsgeräte vorzunehmenden Bedienungsvorgänge auf einem Zentral-Bediengerät zusammengefaßt und auf einem Zentral-Monitor zur Überwachung dargestellt, wobei auch der Zentral-Monitor mit einem Rundfunk/Stereo-Steuerteil verbunden sein kann, so daß gleichzeitig sowohl der Zentral-Monitor als auch das Zentral-Steuerteil als Radiogerät zur Information der Hausfrau innerhalb der Küche eingesetzt werden kann.

Der Einsatz einer zentralen Steuereinheit ermöglicht es, eine sehr große Variantenvielfalt für die Nutzung des Gesamtsystems als auch für die Nutzung der einzelnen angeschlossenen Steuereinheiten zur Verfügung zu stellen. Um die richtige Auswahl der gewünschten tatsächlichen Einzelanwendung zu treffen, ist die Fülle der angebotenen Variantenvielfalt durch entsprechend eingabetechnisch durchzuführende Maßnahmen vorzunehmen. Das angestrebte Ziel ist damit nur über eine Mehrzahl von aufeinanderfolgenden Auswahlschritten zwar bedientechnisch unterstützt, aber dennoch umständlich zu erreichen.

Aus DE-A-4 004 097 ist eine Bedienung und Überwachung von Haushaltsgeräten mittels eines Steuerungssystems bekannt, bei welchem einer Mehrzahl von anzusteuernden Einrichtungen eine zentrale Steuereinheit zugeordnet ist, die über Datenwege mit den anzusteuernden Einrichtungen in Kommunikationsverbindung stehen. In dem bekannten Steuerungssystem enthält die zentrale Steuereinheit Programmangebote und- abläufe für die angeschlossenen Einrichtungen gespeichert, wobei die Programmangebote- und abläufe abrufbar auf einem Bildschirm darstellbar sind.

Die an die zentrale Steuereinheit angeschlossenen Haushaltsgeräte lassen sich in unterschiedlicher Betriebsweise betreiben (z. B. Waschmaschine: Kochwäsche, Buntwäsche, etc.).

Ausgehend von diesem Stand der Technik liegt der Erfindung die Aufgabe zugrunde, ein Steuerungssystem der eingangs genannten Art anwender- und bedienerfreundlich auszugestalten.

Diese Aufgabe erfolgt erfindungsgemäß mit einem Steuerungssystem, das in den Ansprüchen definiert ist.

Ein Steuersystem für insbesondere an eine zentrale Steuereinrichtung angeschlossene Haushaltsgeräte, das diesen Anforderungen gerecht wird, ist erfindungsgemäß dadurch gekennzeichnet, daß die Gesamtheit der gespeicherten und durchführbaren Steuer- und Anwenderprogramme für die angeschlossenen, anzusteuernden Einrichtungen nach unterschiedlichen Nutzerprofilen mit jeweils eingeschränkter, individueller Programmauswahl zusammenstellbar und abrufbar organisiert ist.

Bei einem derart ausgestatteten System ergibt sich eine besondere Anwender- und Nutzerfreundlichkeit dadurch, daß es möglich ist, abhängig beispielsweise von der Person des Benutzers, des Wochentages, der Tageszeit, bevorzugt auf Leistungen des Systems zurückgreifen zu können, die in diesem Zusammenhang mit hoher Wahrscheinlichkeit als anwählbar interessant erscheinen. So werden unterschiedliche Personen oder unterschiedliche Personengruppen innerhalb eines Haushalts auf unterschiedliche Angebote zu unterschiedlichen Tageszeiten zurückgreifen wollen. Z.B. werden die Namen der zum Haushalt gehörenden bzw. diesem zuzuordnenden Personen durch die erfindungsgemäß ausgestattete Zentraleinheit über deren Anzeigeschirm angezeigt und zusammen mit einer durch Vorabeingabe umrissenen Programmauswahl zur Anwahl angeboten. So wird zur späten Abendstunde dem aufrufbaren Unterhaltungsangebot von Radio und Fernsehen eine besondere Präferenz einzuräumen sein, und zwar auch hier unterschiedlich je nach Geschmack der interessierten Person bzw. der interessierten Personengruppe. Auch der Zugriff zu den Funktionen eines Haushaltsherdes oder anderer Haushaltsgeräte wird unerschiedlich von den einzelnen Personen eines Haushalts bezüglich des Leistungsangebots bevorzugt gewünscht sein. Die getroffenen Maßnahmen bedeuten, daß jede der zugriffsberechtigten Personen sich ein Nutzerprofil speichern kann, so daß für jeden vordergründig nur das angeboten wird, auf was er auch üblicherweise zurückgreift. Ungewünschte Informationen werden also erst nicht angeboten.

Insbesondere als Maßnahmen zur sogenannten Kindersicherung sollten im erfindungsgemäßen Steuerungssystem für die Eingabe und für den Abruf von Steuerungs- und Informationsangeboten eine Eingabemaßnahme für Schlüsselinformationen vorgesehen sein, um zu verhindern, daß auch für bestimmte Personen nicht bestimmte Dienste der Zugriff verwehrt wird, insbesondere wenn diese Dienste eine Gefährdungssituation allgemein oder insbesondere bei unsachgemäßer Überwachung beinhalten.

Nach einer bevorzugten Weiterbildung ist das erfindungsgemäße Steuersystem dadurch gekennzeichnet, daß an die zentrale Steuereinheit angeschlossene und von dieser anzusteuernden Einrichtungen jeweils eine eigene Ablaufsteuereinheit mit Schreib-Lese-Speicher für eine eingeschränkte Programmablauf-Vielfalt angeordnet ist, wobei es zusätzlich zweckmäßig ist, daß die mit einer Ablaufsteuerung für eingeschränkte Programmvielfalt ausgestatteten Einrichtungen mit Anzeige- und Auswahl-Einheiten für die vorgegebene Programmvielfalt ausgestattet sind.

Damit können die an die zentrale Steuereinheit ansteuerbaren Einrichtungen auch in Verbindung mit der zentralen Steuereinheit, aber auch völlig autark durch die eigene Ablauf-Steuereinheit bedient werden, wobei für diese Anwendungsfälle eben nur eine beschränkte Variantenvielfalt für die Nutzung gegeben sind. In diesem Zusammenhang kann der einzelnen dezentralen Einheit eine Eingabemöglichkeit zur Veränderung von Einstellungsparametern zugeordnet werden. Außerdem sollten bevorzugterweise Eingabeorgane zum Starten und Stoppen der durchzuführenden Funktionsabläufe zugeordnet sein und diese Einrichtungen auch mit einer den eingeschalteten Zustand signalisierenden Anzeigeeinheit ausgestattet sein.

In diesem Zusammenhang erweist es sich auch als zweckmäßig, dem Schreib-Lesespeicher der von der zentralen Einheit anzusteuernden Einheiten ein Standard-Steuerprogramm zum Betrieb dieser Einrichtungen zuzuordnen, welches ausgehend von der zentralen Steuereinheit, durch einen individuell zugeordneten Steuerblock für eine aktuelle Inbetriebnahme der anzusteuernden Einrichtung ersetzbar ist. Nach Beendigung der durch diese Einrichtung aktuell durchzuführenden Funktionen sollte dann automatisch der Rücktausch der eingeschränkten Programmspeicherungen durchgeführt werden. Damit ist für den Fall, daß die zentrale Steuereinheit aus irgendwelchen Gründen nicht nutzbar ist, jedenfalls ein Betrieb der einzelnen, ansonsten von dieser zentralen Steuereinheit ansteuerbaren Einrichtungen möglich, auch wenn nur mit eingeschränktem, aber für diesen Fall ausreichendem Variantenangebot.

Es ist zweckmäßig, die zentrale Steuereinheit dahingehend eingabetechnisch auszugestalten, daß die Auswahl und Zusammenstellung der Benutzerblöcke mit eingeschränkter Programmvielfalt abhängig ist von der Eingabe von Zugriffsberechtigungs-Maßnahmen.

## Patentansprüche

1. Steuerungssystem zur Ansteuerung von Einrichtungen im Haushaltsbereich, insbesondere zur Ansteuerung von Haushaltsgeräten, bei welchen einer Mehrzahl von anzusteuerunden Einrichtungen eine zentrale Steuereinheit zugeordnet ist, die über Datenwege mit den anzusteuernden Einrichtungen in Kommunikationsverbindung stehen, wobei die zentralen Steuereinheit Programmangebote und -abläufe für die angeschlossenen Einrichtungen gespeichert enthält und abrufbar auf einem Bildschirm darstellt,
**dadurch gekennzeichnet**, daß die Gesamtheit gespeicherter und durchführbarer Steuer- und Anwenderprogramme für angeschlossene, anzusteuernde Einrichtungen nach unterschiedlichen Nutzerprofilen zugriffsberechtigter Personen in jeweils eingeschränkter, individueller Programmauswahl zusammenstellbar und abrufbar organisiert ist.

2. Steuerungssystem nach Anspruch 1, **dadurch gekennzeichnet**, daß an einer Einrichtung, die an die zentrale Steuereinheit angeschlossen und von dieser anzusteuern ist, eine eigene Ablaufsteuereinheit mit Schreib-Lese-Speicher für eine Programmauswahl angeordnet ist.

3. Steuerungssystem nach Anspruch 2, **dadurch gekennzeichnet**, daß eine Einrichtung, die an die zentrale Steuereinheit angeschlossen und von dieser anzusteuern ist, mit Anzeige- und Auswahl-Einheiten für eine Programmauswahl ausgestattet ist.

4. Steuerungssystem nach einem der Ansprüche 2 oder 3, **dadurch gekennzeichnet**, daß ein Programmblock mit einer Programmauswahl, die in einen Schreib-Lese-Speicher der anzusteuernden Einrichtung abspeicherbar ist, über die zentrale Steuereinheit mit einem weiteren Programmblock mit einer weiteren Programmauswahl aus der zentralen Steuereinheit austauschbar ist.

5. Steuerungssystem nach Anspruch 4, **dadurch gekennzeichnet**, daß der Austausch der Blöcke, gesteuert durch die zentrale Steuereinheit, vor der jeweiligen Inbetriebnahme der anzusteuernden Einrichtung erfolgt und nach Beendigung des durchzuführenden Programmablaufs wieder selbständig rückgängig gemacht wird.

6. Steuerungssystem nach einem der Ansprüche 1 bis 5, **dadurch gekennzeichnet**, daß zumindest einzelne Programmauswahlblöcke nach vorheriger Eingabe einer Schlüssel-Information abrufbar und durchführbar sind.

## Claims

1. Control system for the drive control of equipments in the household, in particular for the drive control of domestic appliances, for which a central control unit is associated with a plurality of equipments to be controlled in drive and stands in communications connection with the equipments to be controlled in drive by way of data paths, wherein the central control unit contains program offers and sequences stored for the connected equipments and represents them on a picture screen when called up, characterised in that the totality of stored and performable control and user programs for connected equipments to be controlled in drive is organised to be assemblable and callable up in respective restricted individual program selection according to different user profiles of persons authorised for access.

2. Control system according to claim 1, characterised in that an individual sequence control unit with read-write memory for a program selection is arranged at an equipment which is connected to the central control unit and to be controlled in drive by it.

3. Control system according to claim 2, characterised in that an equipment, which is connected to the central control unit and to be controlled in drive by it, is equipped with display and selection units for a program selection.

4. Control system according to claim 2 or 3, characterised in that a program block with a program selection, which is storable in a read-write memory of the equipment to be controlled in drive, is exchangeable by way of the central control unit with a further program block with a further program selection from the central control unit.

5. Control system according to claim 4, characterised in that the exchange of the blocks under the control by the central control unit takes place before the respective putting into operation of the equipment to be controlled in drive and is automatically cancelled again after completion of the program sequence to be carried out.

6. Control system according to one of the claims 1 to 5, characterised in that at least individual program selection blocks are callable up and performable after previous input of a code information.

## Revendications

1. Système de commande pour appareils à usage domestique, en particulier pour la commande d'appareils ménagers dans lesquels une pluralité d'appareils à commander sont soumis à une unité de commande centrale, laquelle est en liaison de communication avec les appareils à commander par des routes de données, l'unité de commande centrale ayant en mémoire et présentant, de manière appelable sur un écran, des offres et des déroulements de programme pour les appareils connectés, caractérisé en ce que l'ensemble des programmes de commande et d'utilisation mémorisés et exécutables est organisé pour des appareils raccordés à commander selon différents profils d'utilisateur de personnes autorisées dans chacune des sélections de programme limitées et individuelles et ce de façon à pouvoir être regroupés et interrogés.

2. Système de commande selon la revendication 1, caractérisé en ce que, sur un appareil qui est raccordé à l'unité de commande centrale et qui doit être commandé par celle-ci, une unité propre de commande de déroulement avec mémoire de lecture et d'écriture est arrangée pour une sélection de programme.

3. Système de commande selon la revendication 2, caractérisé en ce qu'un appareil qui est raccordé à l'unité de commande centrale et qui doit être commandé par celle-ci est pourvu d'unités d'affichage et de sélection pour une sélection de programme.

4. Système de commande selon la revendication 2 ou 3, caractérisé en ce qu'un bloc de programme avec une sélection de programme qui est mémorisable dans une mémoire d'écriture et de lecture de l'appareil à commander est remplaçable au moyen de l'unité centrale de commande par un bloc de programme supplémentaire avec une sélection de programme supplémentaire hors de l'unité centrale de commande.

5. Système de commande selon la revendication 4, caractérisé en ce que le remplacement des blocs, commandé par l'unité de commande centrale, se fait avant chaque mise en marche de l'appareil à commander et est à nouveau annulé après la fin du déroulement du programme à exécuter et ce de façon indépendante.

6. Système de commande selon l'une quelconque des revendications 1 à 5, caractérisé en ce qu'au moins des blocs individuels de sélection de programme sont appelables et exécutables après l'entrée préalable d'une information clé.
